# EUROPÄISCHE PATENTANMELDUNG

(11) **EP 4 236 334 A1**
(43) Veröffentlichungstag der Anmeldung: **30.08.2023**
(21) Anmeldenummer: 23155954.3
(22) Anmeldetag: 10.02.2023
(51) Int. Cl.: H04N 23/50, H04N 23/66

(54) **ELEKTRONISCHE KAMERA**

(30) Priorität: 24.02.2022 DE 102022104409
(71) Anmelder: Arnold & Richter Cine Technik GmbH & Co. Betriebs KG, 80807 München (DE)
(72) Erfinder: POPP, Hermann, 81547 München (DE); ZEIDLER, Frank, 81827 München (DE); MANN, Alexander, 80686 München (DE); HAUBMANN, Michael, 1230 Wien (AT)
(74) Vertreter: Manitz Finsterwald Patent- und Rechtsanwaltspartnerschaft mbB

(57) **Zusammenfassung**

Die Erfindung betrifft eine modulare und insbesondere verteilte elektronische Kamera mit einem Bilderfassungsmodul umfassend einen Bildsensor sowie eine mit dem Bildsensor gekoppelte Bildverarbeitungseinheit, einem Bedienmodul zur Steuerung und/oder Konfiguration der Kamera und einem Anzeigemodul zur Darstellung von vom Bildsensor erfassten Kamerabildern, wobei das Bilderfassungsmodul, das Bedienmodul und das Anzeigemodul Kameramodule sind. Die erfindungsgemäße Kamera zeichnet sich dadurch aus, dass das Bilderfassungsmodul, das Bedienmodul und das Anzeigemodul mittels eines Datennetzwerks miteinander verbunden sind, wobei das Datennetzwerk eine Verteileinheit aufweist, welche ausgebildet ist, Daten über das Datennetzwerk von den Kameramodulen zu empfangen und Daten von einem der Kameramodule zu zumindest einem der anderen Kameramodule weiterzuleiten.

## Beschreibung

Die vorliegende Erfindung betrifft eine modulare und insbesondere verteilte elektronische Kamera mit einem Bilderfassungsmodul umfassend einen Bildsensor sowie eine mit dem Bildsensor gekoppelte Bildverarbeitungseinheit. Die elektronische Kamera umfasst weiterhin ein erstes Funktionsmodul, beispielsweise ein Bedienmodul zur Steuerung und/oder Konfiguration der Kamera, und ein zweites Funktionsmodul, beispielsweise ein Anzeigemodul zur Darstellung von vom Bildsensor erfassten Kamerabildern. Das Bilderfassungsmodul und die Funktionsmodule sind dabei Kameramodule.

Bei heutigen professionellen Filmkameras, wie sie beispielsweise bei Film- und Fernsehproduktionen eingesetzt werden, sind innerhalb der Kamera eine Vielzahl unterschiedlicher Schnittstellen im Einsatz, die für Bild-, Ton-, Synchronisations- oder Metadaten eingesetzt werden. Auch umfassen heutige Kameras in der Regel eine Vielzahl externer Schnittstellen, die das Anschließen von externem Zubehör ermöglichen.

Allerdings setzen die vielen verschiedenen Schnittstellen Grenzen beim flexiblen Einsatz bzw. bei der Umrüstbarkeit der Kamera. Nur jeweils speziell für die vorhandenen Schnittstellen eingerichtetes Zubehör kann mit den vorhandenen Schnittstellen verwendet werden. Die Anbindung von neuem oder anderem Zubehör oder eine Veränderung der internen Hardware der Kamera erfordert in der Regel eine Firmware- und/oder Software-Anpassung, um die Kamera beispielsweise an neue Schnittstellen, neue Protokolle und dergleichen anzupassen.

Es ist daher die der Erfindung zugrundeliegende Aufgabe, eine elektronische Kamera anzugeben, die flexibel auf- oder umrüstbar und veränderbar ist.

Diese Aufgabe wird durch eine elektronische Kamera gemäß Anspruch 1 gelöst.

Die erfindungsgemäße Kamera zeichnet sich dadurch aus, dass das Bilderfassungsmodul und das erste sowie zweite Funktionsmodul (also z.B. das Bedienmodul und das Anzeigemodul) mittels eines (insbesondere desselben) Datennetzwerks miteinander verbunden sind, wobei das Datennetzwerk eine Verteileinheit aufweist, welche ausgebildet ist, Daten über das Datennetzwerk von den Kameramodulen zu empfangen und Daten von einem der Kameramodule zu zumindest einem der anderen Kameramodule weiterzuleiten.

Die Funktionsmodule dienen insbesondere dazu, jeweils einen Teil der Funktionen der Kamera zur Verfügung zu stellen.

Die Kameramodule können jeweils direkt und/oder separat mit der Verteileinheit gekoppelt sein. Es kann beispielsweise vorgesehen sein, dass Daten (z.B. zumindest ein Datenstrom) eines Kameramoduls in der Verteileinheit empfangen und von der Verteileinheit an andere Kameramodule weitergeleitet wird.

Die Erfindung setzt dabei auf der Erkenntnis auf, dass durch die Anbindung der Kameramodule über das Datennetzwerk an die Verteileinheit mittels der Verteileinheit eine gleichartige Schnittstelle für sämtliche Kameramodule geschaffen wird. Bei der Verteileinheit kann es sich beispielsweise um einen Switch in einem Ethernet-Netzwerk handeln, wie unten noch genauer erläutert wird. Durch die erfindungsgemäße Kommunikation der Kameramodule über das Datennetzwerk wird eine klare Modularisierung der Kamera geschaffen, so dass die Kamera grundsätzlich flexibel erweiterbar und veränderbar ist. Grundsätzlich können mit dem Bilderfassungsmodul beliebige Funktionsmodule und/oder Kameramodule über das Datennetzwerk gekoppelt werden, um verschiedene Ausstattungsvarianten oder Funktionen der Kamera abzubilden.

Vorteilhafterweise muss die Verteileinheit nicht in der Lage sein, die Daten von sämtlichen Kameramodulen zu interpretieren, sondern kann die Daten der Kameramodule einfach an andere Kameramodule weiterleiten.

Grundsätzlich kann die Topologie des Datennetzwerks beliebig gewählt werden. Das Datennetzwerk kann die Kameramodule beispielsweise mittels einer Ring- oder Daisy-Chain-Topologie verbinden. Die Verteileinheit bei einer Ring- oder Daisy-Chain-Topologie wird dann durch die Verkabelung des Datennetzwerks und/oder die Kameramodule selbst gebildet. Alternativ oder zusätzlich kann das Datennetzwerk auch eine Sterntopologie umfassen, beispielsweise mit einem zentralen Switch oder mit verteilten Switches.

Außerdem ist es möglich, sowohl interne Kameramodule ohne großen Aufwand auszutauschen oder neu anzuschließen, da, insbesondere sämtliche, Kameramodule über das Datennetzwerk mit der Verteileinheit gekoppelt sind. Eine Änderung der Firm- und/oder Software in der Kamera kann dadurch vermieden werden. Selbiges gilt für extern angeschlossene Kameramodule. Solche extern angeschlossenen Kameramodule können genau wie interne Kameramodule über das Datennetzwerk mit der Verteileinheit gekoppelt werden. Auf diese Weise ist es möglich, Kameramodule nach extern zu verlagern, so dass der, z.B. in der Hand oder auf der Schulter, getragene Teil der Kamera deutlich kleiner und damit leichter und handlicher ausfallen kann.

Durch die Erfindung wird die Kamera folglich leichter skalierbarer, modularer und lässt sich unter verschiedenen Anforderungen einsetzen.

Es versteht sich, dass die oben genannten erfindungsgemäßen Kameramodule auch durch andere hierin beschriebene Kameramodule ersetzt oder ergänzt werden können.

Unter einem Kameramodul und/oder einem Funktionsmodul ist insbesondere eine Funktionsgruppe zu verstehen, die eine bestimmte (Teil-)Funktion der Kamera ausführt.

Bei dem Bilderfassungsmodul ist ein Bildsensor mit der zugehörigen Elektronik gekoppelt, wobei die zugehörige Elektronik hier als Bildverarbeitungseinheit bezeichnet wird. Die Bildverarbeitungseinheit kann beispielsweise eine Spannungsversorgung, eine Temperaturstabilisierung und/oder Kühlung des Bildsensors bewirken. Die Bildverarbeitungseinheit kann weiterhin ausgebildet sein, die vom Bildsensor erfassten Kamerabilder auszulesen und beim Auslesen auf ein vorgegebenes Timing und/oder eine Triggerung zu achten.

Die Bildverarbeitungseinheit überführt die Kamerabilder bevorzugt in ein digitales Format, das über das Datennetzwerk verschickt werden kann. Die Kamerabilder können als Einzelbilder oder als Video vorliegen. Beispielsweise können die Kamerabilder als Stream über das Datennetzwerk übertragen werden.

Das Bedienmodul kann ein Human-Machine-Interface (HMI) aufweisen, beispielsweise in der Form eines Touchscreens oder einer Anordnung von Schaltern und/oder eines Displays. Das Bedienmodul kann beispielsweise dazu dienen, die Aufnahme von Kamerabildern zu starten oder zu stoppen, eine Framerate bei der Aufnahme von Kamerabildern, eine Farbtiefe und dergleichen einzustellen.

Das Anzeigemodul umfasst bevorzugt ein Display, auf dem z.B. die momentan von dem Bilderfassungsmodul erfassten Kamerabilder angezeigt werden können. Bei dem Anzeigemodul kann es sich beispielsweise um einen Sucher (Electronic View Finder - EVF) oder allgemein um einen Monitor handeln.

Bevorzugt handelt es sich bei, insbesondere sämtlichen, Verbindungen mittels des Datennetzwerks zwischen der Verteileinheit und den Kameramodulen um das gleiche oder selbe Datennetzwerk. Dies bedeutet, dass sämtliche Verbindungen beispielsweise über dasselbe Protokoll erfolgen und/oder die Kameramodule in einem zusammengehörigen Adressbereich des Datennetzwerks liegen.

Bei der Kamera handelt es sich insbesondere um eine Kamera für professionelle Filmaufnahmen, insbesondere ausgebildet zur Aufnahme von Bewegtbildern (Videos), Stand- und Einzelbildern und/oder Time Lapse Aufnahmen, wobei die Kamera z.B. ein wechselbares Objektiv aufweisen kann. Die Kamera (oder das Bilderfassungsmodul) kann z.B. zur Aufnahme von Bilddaten mit einer Auflösung von zumindest 4K, 4,5K oder 8K bei Frameraten von 60 FPS, 90 FPS, 100 FPS oder 150 FPS ausgebildet sein.

Vorteilhafte Ausführungsformen der Erfindung sind der Beschreibung, den Unteransprüchen sowie den Zeichnungen zu entnehmen.

Gemäß einer ersten Ausführungsform umfasst die Verteileinheit einen Netzwerk-Switch, einen Hub, einen Router und/oder ein Gateway. Die Verteileinheit kann auch eine der genannten Netzwerk-Komponenten sein. Bevorzugt weist die Verteileinheit Netzwerk-Ports auf, an die jeweils ein Kameramodul angeschlossen werden kann. Die Ports können unterschiedliche Übertragungsgeschwindigkeiten unterstützen, beispielsweise 10 Mbit, 100 Mbit, 1 Gbit, 10 Gbit, 100 Gbit oder 400 Gbit.

Ist die Verteileinheit ein Hub, werden alle von den Kameramodulen bei der Verteileinheit eingehenden Daten an alle anderen Kameramodule weitergeleitet. Bei einem Switch, Router und/oder Gateway können die eingehenden Daten zielgerichtet an bestimmte Kameramodule weitergeleitet werden. Hierzu enthält die Verteileinheit dann Informationen, welches Kameramodul an welchem Netzwerk-Port angeschlossen ist. Durch die Verwendung beispielsweise eines Switches besteht somit der Vorteil, dass nur für ein jeweiliges Kameramodul bestimmte Daten an dieses Kameramodul von der Verteileinheit weitergeleitet werden. Die vorhandene Übertragungsbandbreite des Datennetzwerks wird folglich nicht unnötig ausgeschöpft.

Gemäß einer weiteren Ausführungsform ist die Verteileinheit kaskadiert und/oder aus Teileinheiten aufgebaut. Die Verteileinheit kann also zum Beispiel "gestacked" sein oder Untereinheiten ("kaskadiert") aufweisen. Es ist lediglich relevant, dass die Komponenten der Verteileinheit miteinander kommunizieren können, so dass eine Kommunikation der Kameramodule untereinander über das Datennetzwerk möglich ist. Alternativ besteht die Möglichkeit, dass die Verteileinheit nur genau eine Komponente aufweist, beispielsweise nur einen Switch.

Bei verteilten und/oder kaskadierten Verteileinheiten ist es auch möglich, dass zumindest ein Teil der Kameramodule jeweils einen Teil der Verteileinheit umfasst. Beispielsweise kann ein Teil der Kameramodule jeweils einen eigenen Switch aufweisen, so dass mehrere solcher Kameramodule in einer Kette mittels Netzwerckabeln verbunden werden können. Dabei kann jedes Kameramodul beispielsweise zumindest zwei Netzwerkbuchsen aufweisen.

Insbesondere sind die Kameramodule betreffend die Datenübertragung nur mittels des Datennetzwerks verbunden. Zusätzliche weitere Kommunikationspfade zur Datenkommunikation zwischen den Kameramodulen existieren bevorzugt dementsprechend nicht, da hierdurch die Modularität und Erweiterbarkeit der Kamera eingeschränkt würde.

Gemäß einer weiteren Ausführungsform ist die Verteileinheit ausgebildet, über das Datennetzwerk mit der Verteileinheit verbundene Kameramodule zu erkennen und das Weiterleiten von Daten der Kameramodule basierend auf den verbundenen Kameramodulen vorzunehmen. Wie oben schon kurz erläutert, ist ein solches zielgerichtetes Weiterleiten beispielsweise bei einem Switch, Router oder Gateway möglich. Die Verteileinheit kann beispielsweise erkennen, dass Daten z.B. eines Audiomoduls nicht an das Bilderfassungsmodul weitergeleitet werden müssen, sondern stattdessen nur dem Bedienmodul oder einem Aufzeichnungsmodul zur Verfügung gestellt werden sollen. Auf diese Weise kann wiederum Übertragungskapazität in dem Datennetzwerk eingespart werden. Falls Daten eines Kameramoduls von mehreren oder allen anderen Kameramodulen benötigt werden, kann die Verteileinheit und/oder das jeweils sendende Kameramodul einen Multicast oder einen Broadcast verwenden. Durch einen Multicast werden die Daten an mehrere Kameramodule gleichzeitig, durch einen Broadcast an alle Kameramodule gleichzeitig gesandt.

Gemäß einer weiteren Ausführungsform überträgt zumindest eines der Kameramodule, insbesondere nach dem Anschließen an das Datennetzwerk, ein Geräteprofil über das Datennetzwerk, wobei das Geräteprofil eine Geräteklasse des Kameramoduls sowie Informationen zum Funktionsumfang des Kameramoduls umfasst. Die Kamera passt ihre Betriebsparameter anhand des übertragenen Geräteprofils oder der übertragenen Geräteprofile an, um das übertragende Kameramodul in den Betrieb der Kamera einzubinden. Anders ausgedrückt wertet die Kamera also die Geräteprofile der angeschlossenen Kameramodule aus, um z.B. den Betrieb der Kamera an die angeschlossenen Kameramodule anzupassen und gegebenenfalls auf die Kameramodule zu optimieren.

Die Kamera kann zu diesem Zweck eine Steuereinheit aufweisen, die die Geräteprofile des Kameramoduls oder der Kameramodule auswertet. Die Steuereinheit kann die hierin beschriebenen Schritte jeweils durchführen und/oder anstoßen. Insbesondere kann ein Kameramodul oder die Verteileinheit die Funktionen der Steuereinheit ausführen.

Die Geräteprofile ermöglichen es, durch eine Kapselung und/oder Beschreibung der Funktionalitäten der Kameramodule mittels der Geräteprofile ein standardisiertes Datenformat zu schaffen, wodurch ein einheitliches Format zum Austausch von Fähigkeiten und Einschränkungen zwischen der Kamera und den Kameramodulen geschaffen wird. Insbesondere teilen die Kameramodule mit dem Geräteprofil jeweils ihre Anforderungen und auch Informationen zu ihrem Funktionsumfang der Kamera mit.

Durch die Übertragung der Geräteprofile kann die Kamera dann auf nahezu beliebige und auch neue Kameramodule sinnvoll reagieren, ohne dass eine Änderung der Firm- und/oder Software der Kamera benötigt wird. Der Entwicklungsaufwand zur Integration von neuem und/oder anderem Zubehör (d.h. von Kameramodulen) kann somit deutlich gesenkt werden.

Durch das Anschließen und das Einbinden in den Betrieb der Kamera, wird das jeweilige Kameramodul selbst Teil der Kamera. Insbesondere kann das Kameramodul die Kamera erst vollständig funktionsfähig machen, beispielsweise wenn es sich bei dem Kameramodul um ein Objektiv oder ein Bilderfassungsmodul handelt.

Nach dem Anschließen der Kameramodule über das Datennetzwerk kann auch ein Austausch der Geräteprofile stattfinden. Dies bedeutet, dass auch das neu angeschlossene Kameramodul von bereits in der Kamera vorhandenen Kameramodulen die Geräteprofile über das Datennetzwerk erhält. Bevorzugt kann dann das neu angeschlossene Kameramodul auch seinen Betrieb an die bereits vorhandenen Kameramodule anpassen.

Zum Einbinden neu angeschlossenen Kameramoduls in den Betrieb der Kamera verändert die Kamera ihre Betriebsparameter. Die Betriebsparameter können beispielsweise das Datenformat und/oder das Protokoll festlegen, mittels welchem über die Datenschnittstelle mit dem neu angeschlossenen Kameramodul kommuniziert wird. Die Betriebsparameter können aber auch beispielsweise eine Framerate und/oder oder eine Auflösung der von der Kamera erfassten Kamerabilder umfassen. Wird beispielsweise als neues Kameramodul ein Speichermodul an die Kamera angeschlossen, welches maximal eine Auflösung von 4K bei einer Framerate von 60 FPS unterstützt, so können die Betriebsparameter dahingehend eingestellt werden, dass Kamerabilder mit einer Auflösung von 4K und einer Framerate von 60 FPS erzeugt und/oder zumindest in diesem Format an das Speichermodul übertragen werden. Grundsätzlich sind unter den Betriebsparametern sämtliche Einstellungen der Kamera zu verstehen, die Auswirkungen auf den Betrieb der Kamera besitzen können.

Die Geräteklasse kann beispielsweise angeben, ob es sich bei dem Kameramodul um ein Bilderfassungsmodul, ein Speichermodul oder ein Wiedergabemodul handelt. Die Informationen zum Funktionsumfang können für das Bilderfassungsmodul z.B. die maximale Auflösung, Framerate, Farbtiefe, und dergleichen angeben. Für das Speichermodul können z.B. die Speicherkapazität und für das Wiedergabemodul die abspielbaren Dateiformate angegeben sein.

Durch die in dem Geräteprofil enthaltene Geräteklasse kann die Kamera als Rückfallposition ihre Betriebsparameter z.B. an ein, insbesondere vordefiniertes, Standardgerät dieser Geräteklasse anpassen. Auf diese Weise können auch neu entwickelte Kameramodule in den Betrieb der Kamera eingebunden werden, selbst wenn die neu entwickelten Kameramodule Funktionen aufweisen, die von der Kamera nicht unterstützt werden. In diesem Fall können zumindest Basisfunktionen (z.B. die Funktionen des Standardgeräts) trotzdem nutzbar sein. Zum Beispiel kann ein neuartiges Entfernungsmesssystem, welches mehrere Messpunkte aufweist, trotzdem an einer existierenden Kamera verwendet werden, da es als der Geräteklasse Entfernungsmesssystem zugehörig erkannt wird und z.B. auch einen Wert liefert, der einem existierenden Ein-Punkt Entfernungsmessgerät entspricht. Auf diese Weise kann ein Softwareupdate für Bestandsgeräte bei der Markteinführung neuer Kameramodule vermieden werden.

Gemäß einer weiteren Ausführungsform ist jedes der Kameramodule als eigenständige Netzwerkkomponente ausgebildet. Dies bedeutet, jedes der Kameramodule ist in der Lage, eigenständig über das Datennetzwerk zu kommunizieren. Jedes Kameramodul kann hardwaremäßig für die Kommunikation über das Datennetzwerk ausgebildet sein und umfasst dementsprechend eine passende physikalische Schnittstelle (PHY-Schnittstelle). Auch kann in jedem Kameramodul ein zur Kommunikation über das Datennetzwerk benötigter Protokoll-Stack implementiert sein.

Gemäß einer weiteren Ausführungsform umfasst das Datennetzwerk ein Ethernet-Netzwerk, ein Feldbus-Netzwerk oder ein Non-IP-Netzwerk (NIN). Alternativ ist das Datennetzwerk eines der vorgenannten Netzwerke. Ethernet definiert beispielsweise kabelgebundene Datennetzwerke, mit Übertragungsraten zwischen 1 Mbit und 400 Gbit. Bei einem Ethernet-Netzwerk sind sowohl die physische Schicht (OSI Layer 1) als auch die Data-Link-Schicht (OSI Layer 2) vorgegeben. Das Datennetzwerk kann zumindest abschnittsweise auch durch ein WLAN (Wireless Local Area Network) gebildet werden. In diesem Fall können ein oder mehrere Kameramodule und/oder die Verteileinheit einen WLAN-Transceiver umfassen, so dass Kameramodule auch mittels WLAN in das Datennetzwerk eingebunden werden können.

Ein Feldbus-Netzwerk kann beispielsweise eine Echtzeitfähigkeit bereitstellen. Das Feldbus-Netzwerk kann alternativ oder zusätzlich Ethernet-basiert sein. Bei dem Feldbus-Netzwerk kann es sich z.B. um EtherCAT, EIP, Sercos III und dergleichen handeln. Bei dem Non-IP-Netzwerk (NIN) kann es sich insbesondere um ein nicht-paketbasiertes sondern um ein Stream-basiertes Netzwerk handeln.

Gemäß einer weiteren Ausführungsform ist die Verteileinheit ausgebildet, mit den Kameramodulen über das Datennetzwerk mittels desselben Protokolls zu kommunizieren. Es ist auch der Einsatz mehrerer Protokolle möglich, die für die Kommunikation mit den Kameramodulen zur Verfügung stehen, wobei jeweils ein passendes Protokoll ausgewählt wird, welches bevorzugt das sendende und das empfangende Kameramodul beherrschen. Vorteilhafterweise ist somit keine Protokollumwandlung notwendig. Dasselbe und/oder dieselben Protokolle können Protokolle aus den OSI-Schichten 3, 4, 5, 6 und/oder 7 sein. Beispielsweise kann als Transportprotokoll TCP (Transmission Control Protocol) und/oder UDP (User Datagramm Protokoll) verwendet werden. Zudem kann RTP (Real-Time Transport Protocol) zum Einsatz kommen, insbesondere für echtzeitkritische Daten.

Unterschiedliche Kameramodule können dasselbe Protokoll zur Datenübermittlung über das Datennetzwerk verwenden, wobei aber die physische Schicht (OSI Layer 1) und/oder die Data-Link-Schicht (OSI Layer 2) unterschiedlich sein können. So können für Verbindungen mit hohem Datendurchsatz Lichtwellenleiter (z.B. ab 10 Gbit/s), für andere Verbindungen Kupferkabel, eingesetzt werden.

Weiterhin kann das Format der Daten, welches die Kameramodule für die Übertragung über das Datennetzwerk verwenden, ebenfalls einheitlich sein. Für Zusatzinformationen (wie Metadaten) in den Daten, können z.B. JSON (JavaScript Object Notation) oder XML (Extensible Markup Language) verwendet werden. Die Zusatzinformationen zusammen mit den eigentlichen Bilddaten können in einer Container-Datei gespeichert sein, beispielsweise im Material Exchange Format (MXF). Ein einheitliches Datenformat birgt den Vorteil, dass jedes Kameramodul die Daten der anderen Kameramodule zumindest so weit verarbeiten kann, wie es für die Funktion des jeweiligen Moduls notwendig ist.

Gemäß einer weiteren Ausführungsform wird zumindest eine Verbindung zwischen der Verteileinheit und einem der Kameramodule mittels eines Kupferkabels hergestellt. Bei dem Kupferkabel kann es sich beispielsweise um ein Ethernet-Kabel mit einer maximalen Übertragungsrate von z.B. 1 Gbit oder 10 Gbit handeln. Alternativ oder zusätzlich kann zumindest eine Verbindung zwischen der Verteileinheit und einem der Kameramodule mittels eines Lichtwellenleiters hergestellt werden. Wie oben schon angedeutet, kann ein Glasfaserkabel oder eine Glasfaserverbindung mit einer Übertragungsrate z.B. von 10 Gbit, 100 Gbit, 200 Gbit oder 400 Gbit eingesetzt werden.

Gemäß einer weiteren Ausführungsform ist die Kamera ausgebildet, eine Synchronisation der Kameramodule mittels einer Zeit-Synchronisation, insbesondere mittels des Precision-Time-Protocols (PTP) oder durch Time-Sensitive-Networking (TSN) zu erzielen. Für die Funktion der Kamera ist es wichtig, dass Aktionen der einzelnen Kameramodule zeitlich aufeinander abgestimmt sind. Durch die Synchronisation mittels PTP kann eine Synchronisation mit einer Genauigkeit im Bereich von Mikrosekunden, bei Ausführung mittels Hardware sogar eine Genauigkeit im Bereich von Nanosekunden erzielt werden. Beim Einsatz von PTP werden die Verzögerungen bei der Übertragung über das Datennetzwerk bestimmt, so dass eine interne Zeitbasis der Kameramodule und der Verteileinheit aneinander angepasst werden kann. Es versteht sich, dass auch andere Methoden der Zeit-Synchronisation der Kameramodule eingesetzt werden können.

Überdies kann beim Einsatz eines echtzeitfähigen Feldbusses die Zeit-Synchronisation dem Datennetzwerk inhärent sein.

Gemäß einer weiteren Ausführungsform kann die Stromversorgung der Kameramodule zumindest zum Teil mittels des Datennetzwerks, beispielsweise mittels *Power over Ethernet* (PoE) erfolgen. Die ohnehin benötigten Netzwerkkabel zur Anbindung der Kameramodule können dann nicht zur zum Datentransport sondern auch zur Stromversorgung eingesetzt werden. Auf diese Weise kann Verkabelungsaufwand in der Kamera eingespart werden, so dass die Kamera wiederum kleiner und kompakter ausgebildet werden kann.

Gemäß einer weiteren Ausführungsform weist die Kamera eine Zentraleinheit mit einem eigenen Gehäuse auf, wobei in der Zentraleinheit die Verteileinheit angeordnet ist. Weiterhin kann im oder an dem Gehäuse der Zentraleinheit lediglich ein Teil der Kameramodule (und damit auch der Funktionsmodule) angeordnet sein. Beispielsweise kann das Bilderfassungsmodul im Gehäuse der Zentraleinheit angeordnet sein. Andere Kameramodule können außerhalb und/oder beabstandet zu dem Gehäuse der Zentraleinheit vorgesehen sein. Beispielsweise kann das Bedienmodul separat und insbesondere nur über ein Netzwerkkabel mit der Zentraleinheit verbunden sein. Der Teil der Kamera, der bei Filmaufnahmen dann z.B. getragen oder bewegt werden muss, kann somit kleiner und damit handlicher ausfallen.

Grundsätzlich ist aber zu verstehen, dass an oder in der Zentraleinheit beliebige Funktionsmodule und/oder Kameramodule angeordnet sein können. Auf diese Weise kann eine flexible Konfiguration der Kamera erzielt werden.

Gemäß einer weiteren Ausführungsform weisen eines oder mehrere der Kameramodule ein separates Modulgehäuse auf, wobei die Modulgehäuse insbesondere an dem Gehäuse der Zentraleinheit befestigt sind. Durch die separaten Modulgehäuse wird eine Umrüstung der Kamera auf einfache Weise gestattet. Es versteht sich, dass die Modulgehäuse nicht zwangsläufig an dem Gehäuse der Zentraleinheit befestigt sein müssen, sondern z.B. separat und insbesondere nur über Kabel des Datennetzwerks mit dem Gehäuse der Zentraleinheit verbunden sein können.

Gemäß einer weiteren Ausführungsform weist die Kamera zumindest ein weiteres oder mehrere der nachfolgenden Kameramodule auf:
- ein Objektivaufnahmemodul, welches die Ansteuerung eines Fokusmotors und/oder eines Blendenmotors gestattet;
- ein Audiomodul zur Ein- und/oder Ausgabe von Tonsignalen;
- ein Kamera-Positionierungsmodul, welches eine räumliche Position der Kamera und insbesondere des Bilderfassungsmoduls erfasst;
- ein Distanzmessungsmodul, welches Abstände zwischen dem Bilderfassungsmodul und aufzunehmenden Objekten bestimmt;
- ein Speichermodul, welches von dem Bilderfassungsmodul erfasste Kamerabilder speichert;
- ein Wiedergabemodul, welches gespeicherte Kamerabilder wiedergibt;
- ein Prozessormodul, welches Kamerabilder verarbeitet und/oder verändert;
- ein Funkmodul, welches eine Funkschnittstelle für Zubehör bereitstellt;
- ein Konvertierungsmodul, welches analoge und/oder digitale Signale für die Übertragung mittels des Datennetzwerks konvertiert.

Das oder die weiteren Kameramodule können ebenfalls über das Datennetzwerk und die Verteileinheit mit den übrigen Kameramodulen kommunizieren und Daten austauschen.

Bei dem Kamera-Positionierungsmodul kann es sich um ein Modul handeln, das die Position und/oder Orientierung der Kamera im Raum ermittelt und die so ermittelten Daten für andere Kameramodule über das Datennetzwerk bereitstellt. Das Kamera-Positionierungsmodul kann die räumliche Position mittels GPS (Global Positioning System) und/oder Inertialsensoren erfassen.

Bei dem Speichermodul kann es sich um einen Recorder im Datennetzwerk handeln, der die Kamerabilder speichert. Das Wiedergabemodul kann gespeicherte Kamerabilder wiedergeben, beispielsweise auf einem Display. Alternativ kann das Wiedergabemodul die gespeicherten Kamerabilder als Stream in das Netzwerk ausspielen, so dass die gespeicherten Kamerabilder beispielsweise auf einem Anzeigemodul ausgegeben werden können. Das Speichermodul kann fest installierte Speichermedien und/oder Wechselmedien aufweisen. Grundsätzlich kann das Speichermodul beispielsweise in einer Cloud oder auf einem Server am Filmset ausgeführt sein, so dass die Speicherung in der Cloud oder auf dem Server erfolgen kann. Es können auch mehrere Aufnahmemodule in der Kamera vorhanden sein, so dass verschiedene Aufnahme-Funktionen kombiniert werden können, um beispielsweise mehrere Kopien der Bilddaten zu erzeugen.

Das Prozessormodul kann insbesondere Berechnungen auf den Kamerabildern vornehmen, beispielsweise um die Kamerabilder zu linearisieren, Artefakte und Fehler zu korrigieren und/oder Bilder zu stabilisieren. Auch können die Kamerabilder mit Zusatzinformationen wie Metadaten und Ton versehen werden, komprimiert und/oder codiert werden. Das Prozessormodul kann aber auch Audio- und/oder Metadaten verarbeiten. Es können auch mehrere Prozessormodule z.B. über das Datennetzwerk der Kamera miteinander verbunden sein, um die Verarbeitungsressourcen der Prozessormodule aus verschiedenen Kameramodulen zu kombinieren oder die anfallende Arbeitslast auf die Prozessormodule zu verteilen.

Das Funkmodul wandelt bevorzugt von anderen Kameramodulen oder Zubehör (z.B. per WLAN oder mittels eines anderen Funkprotokolls) empfangene Daten und Befehle so um, dass sie über das Datennetzwerk an andere Kameramodule übertragen werden können, insbesondere bidirektional. Das Funkmodul kann beispielsweise das Protokoll und/oder das Datenformat entsprechend jeweils umsetzen.

Das Konvertierungsmodul gestattet insbesondere auch eine bidirektionale Datenübertragung und konvertiert beispielsweise SDI-Signale, L-Bus-Signale, R-S-Signale, koaxiale Signale, analoge Audiosignale und dergleichen.

Das Objektivaufnahmemodul kann auch als Lens-Control-Modul bezeichnet werden und steuert das mit der Kamera verbundene Objektiv und stellt Informationen über das Objektiv und seine Einstellungen bereit. Das Objektivaufnahmemodul kann z.B. Elektromotoren zur Veränderung der Fokusebene, zur Veränderung der Blende und/oder des Zooms umfassen und/oder ausgebildet sein, Objektive mit integrierten Motoren zu steuern. Das Objektivaufnahmemodul kann zudem Steuerinformationen von internen oder externen Kameramodulen empfangen und/oder Statusinformationen an diese Kameramodule senden.

Das Audiomodul kann Audiosignale erfassen, die Audiosignale prozessieren und die Audiosignale für die Wiedergabe an externen und internen Schnittstellen bereitstellen. Das Audiomodul kann z.B. Audioschnittstellen mit dem Datennetzwerk der Kamera verbinden. Die Hauptanwendung des Audiomoduls kann in der Erfassung und Verarbeitung von Audiosignalen für die Tonaufnahme liegen. Das Audiomodul kann aber auch Teil eines Intercom-Systems sein, mit welchem Sprachnachrichten zwischen verschiedenen Personen (z.B. Kamera-Bedienern) übertragen werden.

Zudem kann die Kamera ein Anschlussmodul umfassen, das das Datennetzwerk der Kamera mit einem externen Netzwerk, beispielsweise mittels einer Glasfaserverbindung, insbesondere an eine Studioinfrastruktur und/oder einen Übertragungswagen anschließt.

Weiterhin kann die Kamera ein Stromversorgungsmodul umfassen. Das Stromversorgungsmodul kann beispielsweise mehrere Akkus/Batterien aufweisen, wobei das Stromversorgungsmodul beispielsweise eine verbleibende Batteriekapazität und/oder eine maximale verfügbare Leistung des Stromversorgungsmoduls den anderen Kameramodulen über das Datennetzwerk mitteilen kann.

Es versteht sich, dass auch beliebige weitere und/oder zukünftige Module als Kameramodule in die Kamera eingebunden werden können.

Insbesondere können z.B. mehrere Anzeigemodule an das Datennetzwerk angeschlossen und damit in die Kamera eingebunden sein. Die Anzeigemodule können über das Datennetzwerk z.B. dieselben Bilddaten empfangen. Die Anzeigemodule können eine Bildverarbeitungseinheit aufweisen, die eine Veränderung der Bilddaten vornimmt, bevor die Bilddaten angezeigt werden. Durch die Veränderung kann z.B. auf einem Anzeigemodul eine Falschfarbendarstellung, auf einem anderen Anzeigemodul hingegen eine Farbveränderung vorgenommen werden. Durch die Bildverarbeitungseinheiten in den Anzeigemodulen muss die Kamera oder genauer gesagt das Bilderfassungsmodul vorteilhafterweise nicht verschiedene Bilddaten zur Verfügung stellen. Die Rechenanforderungen an das Bilderfassungsmodul oder ein Prozessormodul können somit sinken, wodurch die Kamera energiesparender, kleiner und/oder kompakter ausgebildet werden kann.

Weiterer Gegenstand der Erfindung ist ein Betriebsverfahren für eine modulare und insbesondere verteilte elektronische Kamera. Die Kamera weist ein Bilderfassungsmodul umfassend einen Bildsensor sowie eine mit dem Bildsensor gekoppelte Bildverarbeitungseinheit, ein erstes Funktionsmodul, beispielsweise ein Bedienmodul zur Steuerung und/oder Konfiguration der Kamera, und/oder ein zweites Funktionsmodul auf, beispielsweise ein Anzeigemodul zur Darstellung von vom Bildsensor erfassten Kamerabildern. Das Bilderfassungsmodul und das erste sowie zweite Funktionsmodul (also z.B. das Bedienmodul und das Anzeigemodul) sind Kameramodule. Das Betriebsverfahren zeichnet sich dadurch aus, dass das Bilderfassungsmodul und das erste sowie zweite Funktionsmodul mittels eines Datennetzwerks miteinander verbunden werden, wobei das Datennetzwerk eine Verteileinheit aufweist, wobei die Verteileinheit Daten über das Datennetzwerk von den Kameramodulen empfängt und Daten von einem der Kameramodule zu zumindest einem der anderen Kameramodule weiterleitet.

Gemäß einer Ausführungsform des Betriebsverfahrens wird die Kamera über das Datennetzwerk mit einer zweiten Kamera gekoppelt. Dabei nutzt die (erste) Kamera zumindest ein Kameramodul der zweiten Kamera. Die erste Kamera kann beispielsweise das Bedienmodul und/oder das Bilderfassungsmodul der zweiten Kamera nutzen, so dass die erste Kamera über das Bedienmodul der zweiten Kamera steuerbar und/oder konfigurierbar ist. Alternativ kann die erste Kamera auch z.B. Berechnungsaufgaben an ein Prozessormodul der zweiten Kamera auslagern. Durch die Verbindung der beiden Kameras ist somit ein Aufteilen und gemeinsames Nutzen der Ressourcen der beiden Kameras untereinander möglich. Allgemein gesprochen, empfängt die zweite Kamera Daten und/oder Befehle von einem Kameramodul der ersten Kamera und/oder leitet Daten und/oder Befehle an ein Kameramodul der ersten Kamera weiter.

Weiterhin ist es möglich, dass zwei Kamera (z.B. über einen Strahlteiler) die gleiche Szene aufnehmen, wobei durch die Verbindung der beiden Kameras der Dynamikbereich oder die Bildaufnahmerate erhöht bzw. verdoppelt werden kann.

Auch die Audiomodule der zwei Kameras können miteinander gekoppelt werden, um z.B. eine bessere Tonqualität zu erzielen. Alternativ oder zusätzlich kann eine Kamera ohne eigenes Audiomodul das Audiosignal anderer Kameras mit aufzeichnen.

Ebenfalls kann eine Kamera mit einem Funkmodul das Funkmodul der zweiten Kamera verwenden, um eine Signalqualität und/oder Datenrate über Funk zu erhöhen. Eine Kamera ohne Funkmodul kann schließlich auch das Funkmodul der zweiten Kamera nutzen, um die Anbindung von Zubehör per Funk zu gestatten.

Wie oben bereits ausgeführt, kann also ein Bedienmodul der zweiten Kamera verwendet werden, um die erste Kamera zu steuern und/oder zu konfigurieren. Alternativ oder zusätzlich kann ein Anzeigemodul der ersten Kamera verwendet werden, um Kamerabilder der zweiten Kamera anzuzeigen.

Gemäß einer weiteren Ausführungsform des Betriebsverfahrens werden das Bilderfassungsmodul der erste) Kamera und das Bilderfassungsmodul der zweiten Kamera über das Datennetzwerk synchronisiert. Solche synchronisierten Aufnahmen können beispielsweise für die Erstellung von dreidimensionalen (3D) Aufnahmen benötigt werden.

Schließlich betrifft die Erfindung ein Kameramodul zum Anschließen an eine modulare Kamera, insbesondere an eine modulare Kamera wie hierin beschrieben, wobei das Kameramodul mittels eines Datennetzwerks mit der modularen Kamera verbindbar ist, wobei das Kameramodul ausgebildet ist, Daten über das Datennetzwerk von zumindest einem anderen Kameramodul zu empfangen und Daten an zumindest eines der anderen Kameramodule zu senden.

Für das erfindungsgemäße Betriebsverfahren und das erfindungsgemäße Kameramodul gelten die Ausführungen zur erfindungsgemäßen Kamera entsprechend. Dies gilt insbesondere hinsichtlich Vorteilen und Ausführungsformen. Es versteht sich, dass die hierin genannten Ausführungsformen miteinander kombiniert werden können, sofern nicht explizit etwas Gegenteiliges angegeben ist.

Nachfolgend wird die Erfindung rein beispielhaft unter Bezugnahme auf die Zeichnungen beschrieben. Dabei wird zunächst allgemein die modulare Kamera beschrieben. Anschließend wird auf die Geräteprofile und auf die Möglichkeit des Monitorings auf verschiedenen Anzeigemodulen eingegangen.

Es zeigen:
- Fig. 1: schematisch eine modulare elektronische Kamera mit einer Verteileinheit;
- Fig. 2: schematisch die räumliche Anordnung der Kameramodule der elektronischen Kamera von Fig. 1;
- Fig. 3: eine schematische Ansicht von an ein Datennetzwerk angeschlossenen Kameramodulen gemäß einer ersten Ausführungsform;
- Fig. 4: schematisch eine Ansicht von an ein Datennetzwerk angeschlossenen Kameramodulen gemäß einer zweiten Ausführungsform;
- Fig. 5: die Kopplung zweier Kameras über ein Datennetzwerk;
- Fig. 6: schematisch die Aufteilung von Geräteprofilen in Geräteklasse und Informationen zum Funktionsumfang; und
- Fig. 7: schematisch über ein Datennetzwerk gekoppelte Anzeigemodule, welche Bilddaten von einem Sendemodul erhalten.

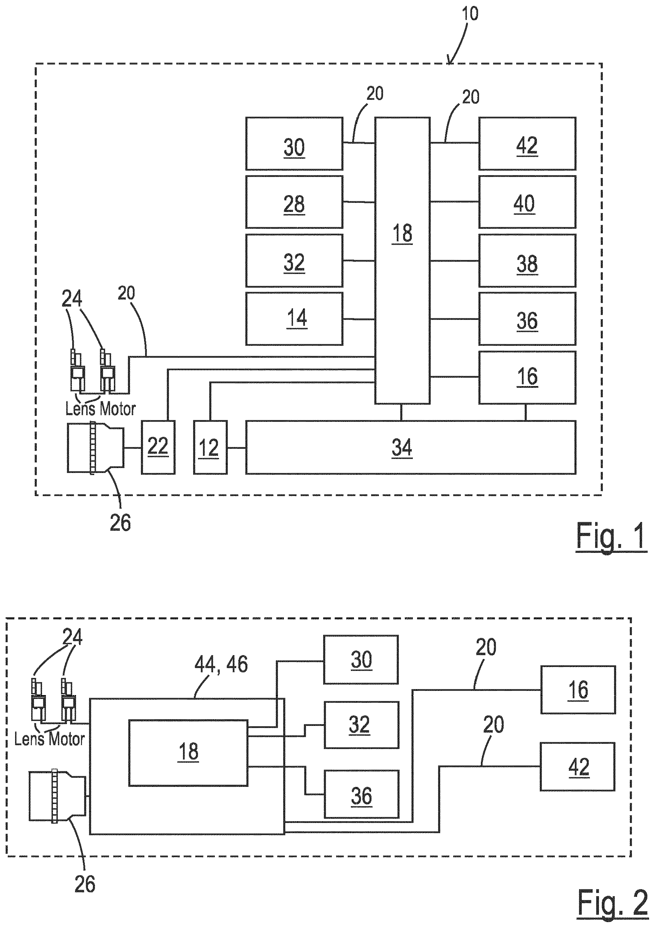

Fig. 1 zeigt eine Kamera 10 mit einem Bilderfassungsmodul 12, welches einen Bildsensor und eine Bildverarbeitungseinheit aufweist. Die Kamera 10 umfasst ferner ein Bedienmodul 14, welches zur Steuerung und/oder Konfiguration der Kamera 10 dient.

Die Kamera 10 umfasst weiterhin ein Anzeigemodul 16, z.B. einen Sucher, welches vom Bildsensor erfasste Kamerabilder darstellt.

Das Bilderfassungsmodul 12, das Bedienmodul 14 und das Anzeigemodul 16 sind Kameramodule und sind jeweils mit einer als Switch 18 ausgebildeten Verteileinheit über Ethernet-Verbindungen 20 gekoppelt. Das Bedienmodul 14 und das Anzeigemodul 16 können auch als erstes und zweites Funktionsmodul bezeichnet werden.

Die Kamera 10 umfasst noch weitere Kameramodule, nämlich ein Objektivaufnahmemodul 22, wobei das Objektivaufnahmemodul 22 in mehrere Teilmodule gegliedert ist und Motoren 24 zur Verstellung eines Objektivs 26 und eine Motorsteuerung 28 zur Steuerung der Motoren 24 aufweist. Die Motoren 24, das Objektiv 26 und die Motorsteuerung 28 könnten alternativ auch als separate Kameramodule angesehen werden.

Weitere Kameramodule der Kamera 10 sind ein Kamera-Positionierungsmodul 30, ein Audiomodul 32, ein Prozessormodul 34, ein Konvertierungsmodul 36, ein Funkmodul 38 und ein Anschlussmodul 40. Schließlich kann die Kamera 10 noch ein zweites Anzeigemodul 42 aufweisen.

Sämtliche der Kameramodule 12, 14, 16, 22, 30, 32, 34, 36, 38, 40, 42 sind über Ethernet-Verbindungen 20 mit dem Switch 18 gekoppelt. Die Ethernet-Verbindungen 20 können als Kupferkabel oder auch als Lichtwellenleiter ausgebildet sein.

Der Switch 18 empfängt von den Kameramodulen jeweils Daten und leitet die Daten zu einem oder mehreren anderen Kameramodulen weiter. Die Kameramodule verwenden dabei das gleiche Datennetzwerk, nämlich ein aus dem Switch 18 und den Ethernet-Verbindungen 20 aufgebautes Datennetzwerk, welches Daten zwischen den Kameramodulen überträgt. Das Datennetzwerk dient als Datenschnittstelle zwischen den Kameramodulen. Durch einfaches Anschließen an das Datennetzwerk können somit andere und/oder zusätzliche Kameramodule in die Kamera 10 integriert werden.

Fig. 2 zeigt die räumliche Anordnung der Kameramodule der Kamera 10 von Fig. 1. Wie in Fig. 2 gezeigt, umfasst die Kamera 10 eine Zentraleinheit 44, die ein eigenes Gehäuse 46 aufweist. In der Zentraleinheit 44 sind der Switch 18 und sämtliche nicht außerhalb der Zentraleinheit 44 gezeigten Kameramodule angeordnet. Außerhalb des Gehäuses 46 der Zentraleinheit 44 ist das Kamerapositionierungsmodul 30, das Audiomodul 32 und das Konvertierungsmodul 36 angeordnet. Diese Module können mechanisch an dem Gehäuse 46 der Zentraleinheit 44 angebracht sein. Demgegenüber sind das Anzeigemodul 16 und das zweite Anzeigemodul 42 beabstandet und außerhalb des Gehäuses 46 angebracht und insbesondere nur über die Ethernet-Verbindungen 20 mit der Zentraleinheit 44 und damit mit dem Switch 18 verbunden. Durch die Auslagerung von Kameramodulen kann der üblicherweise zu bewegende Teil der Kamera 10 kleiner und handlicher gestaltet werden.

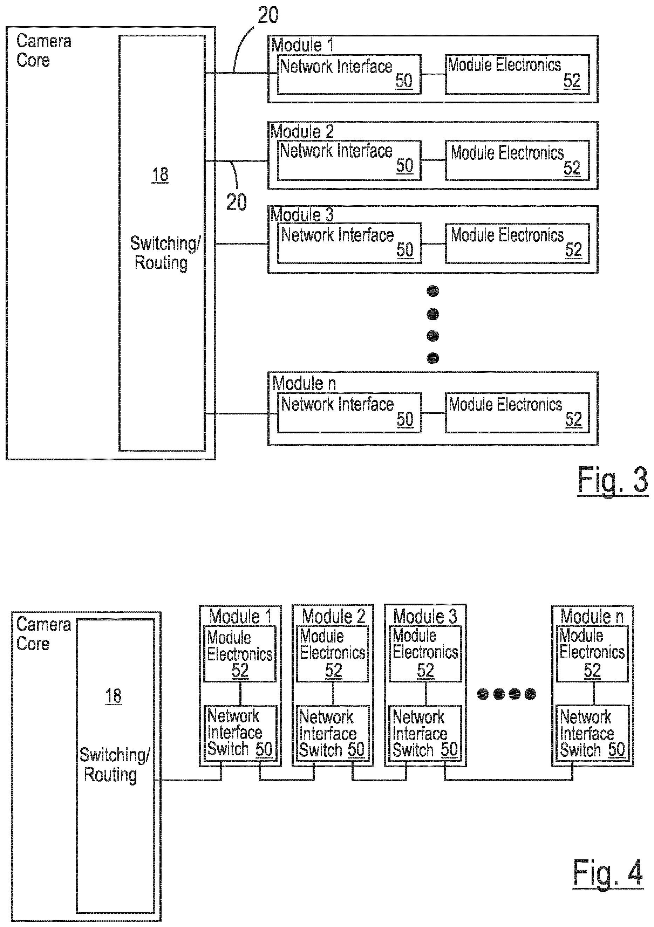

Fig. 3 und Fig. 4 zeigen zwei unterschiedliche Ausführungsformen der Ausbildung des Datennetzwerks. Insbesondere ab Fig. 3 und Fig. 4 werden Kameramodule allgemein mit dem Bezugszeichen 48 dargestellt. Gemäß der ersten Ausführungsform von Fig. 3 verfügen die Kameramodule 48 jeweils über eine eigene Netzwerkschnittstelle 50, d.h. über eigene Hardware zum Anschluss einer Ethernet-Verbindung 20. Die Kameramodule 48 umfassen zudem jeweils eine Modulelektronik 52, die die Kommunikation über die Ethernet-Verbindung 20 steuert und z.B. einen Protokoll-Stack umfasst. Gemäß der Ausführungsform von Fig. 3 sind die Kameramodule 48 jeweils direkt über eine Ethernet-Verbindung 20 mit dem Switch 18 verbunden. Demgegenüber umfassen die Kameramodule 48 gemäß der zweiten Ausführungsform von Fig. 4 in ihrer Netzwerkschnittstelle 50 jeweils die Funktionalität eines Hubs oder Switches und können dementsprechend, wie in Fig. 4 gezeigt, in Form einer Kette verbunden werden. Bei der Ausführungsform von Fig. 4 ist nur ein Kameramodul 48 direkt über eine Ethernet-Verbindung 20 mit dem Switch 18 verbunden. Dieses direkt verbundene Kameramodul 48 umfasst eine weitere Ethernet-Verbindung 20, die das nächste Kameramodul 48 anschließt. Die Daten der nächsten Kameramodule 48 laufen somit zunächst über das direkt mit dem Switch 18 verbundene Kameramodul 48 und werden dann, sofern notwendig, an den Switch 18 weitergeleitet.

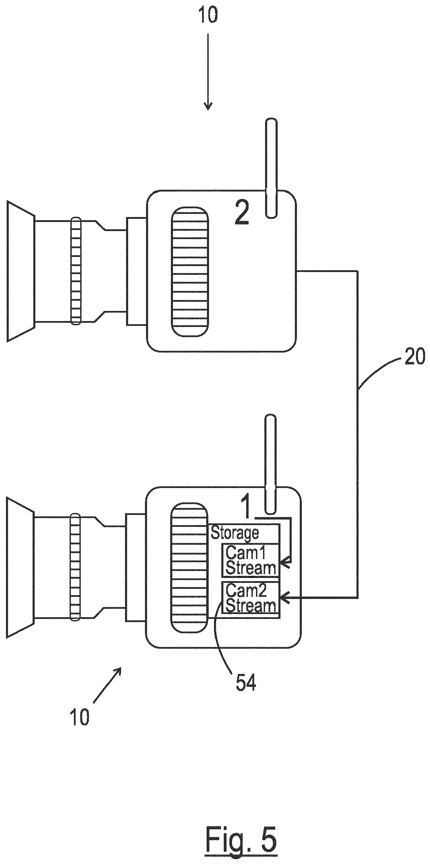

Fig. 5 zeigt die Verbindung zweier Kameras 10 über eine Ethernet-Verbindung 20. Durch die Ethernet-Verbindung 20 zwischen den beiden Kameras 10 können die Datennetzwerke der Kameras 10 zusammengeschlossen werden, so dass die Kameramodule 48 der einen Kamera 10 auf die Kameramodule 48 der anderen Kamera 10 zugreifen können. Beispielsweise kann die in Fig. 5 unten gezeigte Kamera 10 ein Speichermodul 54 aufweisen, das von beiden Kameras 10 zur Speicherung der erzeugten Bilddaten genutzt wird.

Es ist ersichtlich, dass durch die modulare Gestaltung der Kamera 10 mittels der Kameramodule 48 eine große Flexibilität im Aufbau der Kamera 10 erreicht werden kann. Zudem kann die Kamera 10 für den Betrieb klein und leicht gehalten werden, so dass sich am Filmset Vorteile ergeben. Das Datennetzwerk kann zudem auf einfache Weise mit weiteren Kameras gekoppelt werden, um eine Auslagerung von Funktionalitäten von einer auf eine andere Kamera 10 zu ermöglichen, eine Synchronisation von Kameras 10 für 3D-Aufnahmen zu gestatten oder die Steuerung mehrerer Kameras 10 von einem zentralen Punkt aus zu ermöglichen.

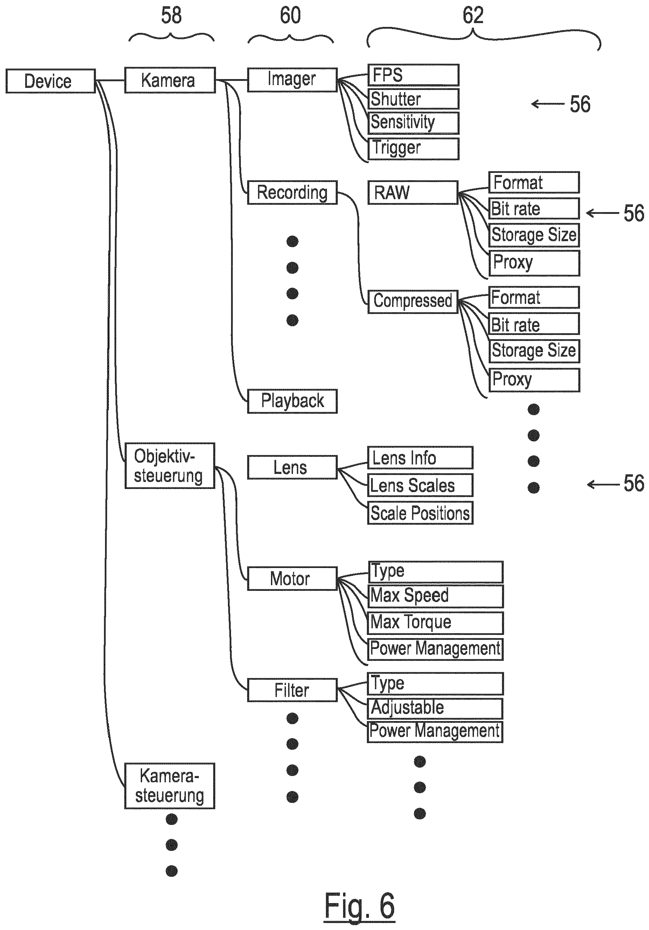

In Fig. 6 sind Geräteprofile von Kameramodulen 48 schematisch dargestellt. Die Geräteprofile 56 umfassen jeweils eine Geräteklasse 58, also beispielsweise "Kamera", "Objektivsteuerung" oder "Kamerasteuerung". Die Geräteklassen 58 umfassen jeweils noch Sub-Klassen 60, die die Geräteklasse genauer definieren. Zu jeder Geräteklasse 58 und/oder zu jeder Sub-Klasse 60 sind Informationen zum Funktionsumfang 62 angegeben, die beispielsweise die Fähigkeiten einer Kamera wiedergeben, z.B. ob die Kamera ein RAW-Format oder ein komprimiertes Format beherrscht.

Wird nun beispielhaft für die in Fig. 2 gezeigte Kamera 10 davon ausgegangen, dass das Kamera-Positionierungsmodul 30 und das Audiomodul 32 an die Kamera 10 angeschlossen werden, so wird für das Kamera-Positionierungsmodul 30 und das Audiomodul 32 zunächst mittels der Ethernet-Verbindung 20 eine Verbindung mit dem Datennetzwerk bzw. der Datenschnittstelle der Kamera 10 hergestellt. Eine (nicht gezeigte) Steuereinheit der Kamera 10, die beispielsweise in der Zentraleinheit 44 angeordnet ist oder die Bestandteil des Prozessormoduls 34 sein kann, bewirkt nach der Herstellung der Verbindung die Übertragung der Geräteprofile 56 vom Kamera-Positionierungsmodul 30 und vom Audiomodul 32 an die Kamera 10. Die Übertragung der Geräteprofile kann beispielsweise in Form einer XML- und/oder JSON-Datei erfolgen.

Nach dem Empfang der Geräteprofile 56 werden die Geräteprofile ausgewertet und Betriebsparameter der Kamera 10 basierend auf den Geräteprofilen 56 angepasst. So kann beispielsweise eine Übermittlung von Audiosignalen zum Audiomodul 32 aktiviert werden. Überdies können beispielsweise die von dem Kamera-Positionierungsmodul 30 ausgegebenen Positionsinformationen an das Prozessormodul 34 weitergeleitet werden. Um solche Datenverbindungen einzurichten, werden die Betriebsparameter der Kamera 10 entsprechend geändert.

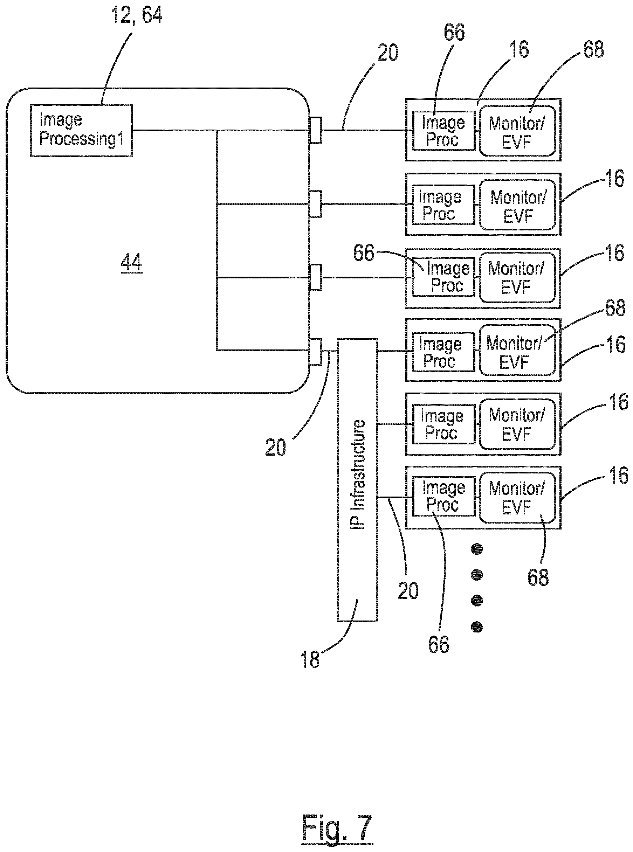

Schließlich wird in Fig. 7 noch die Anzeige unterschiedlicher Varianten von Kamerabildern dargestellt. Fig. 7 zeigt ein Sendemodul 64, welches Teil des Bilderfassungsmoduls 12 ist. Das Sendemodul 64 ist über das Datennetzwerk, d.h. über Ethernet-Verbindungen 20 mit einer Vielzahl von Anzeigemodulen 16 verbunden. Ein Teil der Anzeigemodule 16 ist direkt an der Zentraleinheit 44 angeschlossen. Ein anderer Teil der Anzeigemodule 16 ist über einen weiteren Switch 18 mit dem Sendemodul 64 verbunden. Insbesondere über den weiteren Switch 18 können weitere Anzeigemodule 16 angeschlossen werden, so dass die Anzahl der Anzeigemodule gut skaliert werden kann.

Jedes der Anzeigemodule umfasst eine Bildverarbeitungseinheit 66.

Im Betrieb der Kamera 10 werden von dem Bilderfassungsmodul 12 erzeugte Bilddaten von dem Sendemodul 64 an die Anzeigemodule 16 übermittelt, wobei das Sendemodul 64 lediglich eine Skalierung und/oder Komprimierung der Bilddaten vornimmt. Von den Anzeigemodulen 16 werden die Bilddaten empfangen und mittels der Bildverarbeitungseinheit 66 jeweils verändert, bevor die Bilddaten auf Displays 68 der Anzeigemodule 16 dargestellt werden. Beispielsweise können durch die Bildverarbeitungseinheiten 66 ein Color Grading, eine Falschfarbendarstellung, das Einblenden von Overlays und dergleichen vorgenommen werden.

Durch das Netzwerk-basierte Ausspielen der Bilddaten ist es möglich, verschiedene Anzeigemodule 16 gleichzeitig mit Bilddaten zu versorgen, ohne dass die Rechenressourcen der Kamera 10 stark belastet werden. Eine flexible Gestaltung des Monitorings für verschiedene Anwendungszwecke wird so ermöglicht.

### Bezugszeichenliste

- 10: Kamera
- 12: Bilderfassungsmodul
- 14: Bedienmodul
- 16: Anzeigemodul
- 18: Switch
- 20: Ethernet-Verbindung
- 22: Objektivaufnahmemodul
- 24: Motor
- 26: Objektiv
- 28: Motorsteuerung
- 30: Kamera-Positionierungsmodul
- 32: Audiomodul
- 34: Prozessormodul
- 36: Konvertierungsmodul
- 38: Funkmodul
- 40: Anschlussmodul
- 42: Zweites Anzeigemodul
- 44: Zentraleinheit
- 46: Gehäuse
- 48: Kameramodul
- 50: Netzwerkschnittstelle
- 52: Modulelektronik
- 54: Speichermodul
- 56: Geräteprofil
- 58: Geräteklasse
- 60: Sub-Klasse
- 62: Informationen zum Funktionsumfang
- 64: Sendemodul
- 66: Bildverarbeitungseinheit
- 68: Display

## Patentansprüche

1. Modulare und insbesondere verteilte elektronische Kamera (10) mit einem Bilderfassungsmodul (12) umfassend einen Bildsensor sowie eine mit dem Bildsensor gekoppelte Bildverarbeitungseinheit,
einem ersten Funktionsmodul, beispielsweise einem Bedienmodul (14) zur Steuerung und/oder Konfiguration der Kamera (10), und
einem zweiten Funktionsmodul, beispielsweise einem Anzeigemodul (16) zur Darstellung von vom Bildsensor erfassten Kamerabildern,
wobei das Bilderfassungsmodul (12) und das erste sowie zweite Funktionsmodul Kameramodule (12, 14, 16, 22, 30, 32, 34, 36, 38, 40, 42, 48, 64) sind,
**dadurch gekennzeichnet, dass**
das Bilderfassungsmodul (12) und das erste sowie zweite Funktionsmodul mittels eines Datennetzwerks (18, 20) miteinander verbunden sind, wobei das Datennetzwerk (18, 20) eine Verteileinheit (18) aufweist, welche ausgebildet ist, Daten über das Datennetzwerk (18, 20) von den Kameramodulen (12, 14, 16, 22, 30, 32, 34, 36, 38, 40, 42, 48, 64) zu empfangen und Daten von einem der Kameramodule (12, 14, 16, 22, 30, 32, 34, 36, 38, 40, 42, 48, 64) zu zumindest einem der anderen Kameramodule (12, 14, 16, 22, 30, 32, 34, 36, 38, 40, 42, 48, 64) weiterzuleiten.

2. Kamera (10) nach Anspruch 1,
wobei die Verteileinheit (18) einen Switch, einen Hub, einen Router und/oder ein Gateway umfasst.

3. Kamera (10) nach Anspruch 1 oder 2,
wobei die Verteileinheit (18) kaskadiert und/oder aus Teileinheiten aufgebaut ist.

4. Kamera (10) nach zumindest einem der vorstehenden Ansprüche, wobei die Verteileinheit (18) ausgebildet ist, über das Datennetzwerk (18, 20) mit der Verteileinheit (18) verbundene Kameramodule (12, 14, 16, 22, 30, 32, 34, 36, 38, 40, 42, 48, 64) zu erkennen und das Weiterleiten von Daten der Kameramodule (12, 14, 16, 22, 30, 32, 34, 36, 38, 40, 42, 48, 64) basierend auf den verbundenen Kameramodulen (12, 14, 16, 22, 30, 32, 34, 36, 38, 40, 42, 48, 64) vorzunehmen,
wobei bevorzugt zumindest eines der Kameramodule (12, 14, 16, 22, 30, 32, 34, 36, 38, 40, 42, 48, 64), insbesondere nach dem Anschließen an das Datennetzwerk (18, 20), ein Geräteprofil (56) über das Datennetzwerk (18, 20) überträgt, wobei das Geräteprofil (56) eine Geräteklasse (58) des Kameramoduls (12, 14, 16, 22, 30, 32, 34, 36, 38, 40, 42, 48, 64) sowie Informationen zum Funktionsumfang (62) des Kameramoduls (12, 14, 16, 22, 30, 32, 34, 36, 38, 40, 42, 48, 64) umfasst.

5. Kamera (10) nach zumindest einem der vorstehenden Ansprüche, wobei jedes der Kameramodule (12, 14, 16, 22, 30, 32, 34, 36, 38, 40, 42, 48, 64) als eigenständige Netzwerkkomponente ausgebildet ist.

6. Kamera (10) nach zumindest einem der vorstehenden Ansprüche, wobei das Datennetzwerk (18, 20) ein Ethernet-Netzwerk, ein Feldbus-Netzwerk oder ein Non-IP-Netzwerk (NIN) umfasst oder ein solches Netzwerk ist.

7. Kamera (10) nach zumindest einem der vorstehenden Ansprüche, wobei die Verteileinheit (18) ausgebildet ist, mit den Kameramodulen (12, 14, 16, 22, 30, 32, 34, 36, 38, 40, 42, 48, 64) über das Datennetzwerk (18, 20) mittels desselben Protokolls zu kommunizieren.

8. Kamera (10) nach zumindest einem der vorstehenden Ansprüche, wobei die Kamera (10) ausgebildet ist, eine Synchronisation der Kameramodule (12, 14, 16, 22, 30, 32, 34, 36, 38, 40, 42, 48, 64) mittels einer Zeit-Synchronisation, insbesondere mittels des Precision-Time-Protocolls (PTP) oder durch Time-Sensitive Networking (TSN), zu erzielen.

9. Kamera (10) nach zumindest einem der vorstehenden Ansprüche, wobei die Kamera (10) eine Zentraleinheit (44) mit einem eigenen Gehäuse (46) aufweist, wobei in der Zentraleinheit (44) die Verteileinheit (18) angeordnet ist,
wobei bevorzugt in und/oder an dem Gehäuse der Zentraleinheit (44) lediglich ein Teil der Kameramodule (12, 14, 16, 22, 30, 32, 34, 36, 38, 40, 42, 48, 64) angeordnet ist,
und/oder wobei bevorzugt eines oder mehrere der Kameramodule (12, 14, 16, 22, 30, 32, 34, 36, 38, 40, 42, 48, 64) ein separates Modul-Gehäuse aufweisen, wobei die Modulgehäuse insbesondere an dem Gehäuse der Zentraleinheit (44) befestigt sind.

10. Kamera (10) nach zumindest einem der vorstehenden Ansprüche, wobei die Kamera (10) zumindest ein weiteres der nachfolgenden Kameramodule (12, 14, 16, 22, 30, 32, 34, 36, 38, 40, 42, 48, 64) aufweist:
- eines Objektivaufnahmemoduls, welches die Ansteuerung eines Fokusmotors und/oder eines Blendenmotors gestattet;
- eines Audiomoduls zur Ein- und/oder Ausgabe von Tonsignalen;
- eines Kamera-Positionierungsmoduls, welches eine räumliche Position der Kamera (10) und insbesondere des Bilderfassungsmoduls (12) erfasst;
- eines Distanzmessungsmoduls, welches Abstände zwischen dem Bilderfassungsmodul (12) und aufzunehmenden Objekten bestimmt, und/oder wobei die Kamera (10) zumindest ein weiteres der nachfolgenden Kameramodule (12, 14, 16, 22, 30, 32, 34, 36, 38, 40, 42, 48, 64) aufweist:
- eines Speichermoduls (54), welches von dem Bilderfassungsmodul (12) erfasste Kamerabilder speichert;
- eines Wiedergabemoduls, welches gespeicherte Kamerabilder wiedergibt;
- eines Prozessormoduls, welches Kamerabilder verarbeitet und/oder verändert;
- eines Funkmoduls, welches eine Funkschnittstelle für Zubehör bereitstellt;
- eines Konvertierungsmoduls, welches analoge und/oder digitale Signale für die Übertragung mittels des Datennetzwerks (18, 20) konvertiert.

11. Betriebsverfahren für eine modulare und insbesondere verteilte elektronische Kamera (10) mit einem Bilderfassungsmodul (12) umfassend
- einen Bildsensor sowie eine mit dem Bildsensor gekoppelte Bildverarbeitungseinheit,
- ein erstes Funktionsmodul, beispielsweise ein Bedienmodul (14) zur Steuerung und/oder Konfiguration der Kamera (10), und
- ein zweites Funktionsmodul, beispielsweise ein Anzeigemodul (16) zur Darstellung von vom Bildsensor erfassten Kamerabildern,
wobei das Bilderfassungsmodul (12) und das erste sowie zweite Funktionsmodul Kameramodule (12, 14, 16, 22, 30, 32, 34, 36, 38, 40, 42, 48, 64) sind,
**dadurch gekennzeichnet, dass** gemäß dem Verfahren das Bilderfassungsmodul (12) und das erste sowie zweite Funktionsmodul mittels eines Datennetzwerks (18, 20) miteinander verbunden werden, wobei das Datennetzwerk (18, 20) eine Verteileinheit (18) aufweist, wobei die Verteileinheit (18) Daten über das Datennetzwerk (18, 20) von den Kameramodulen (12, 14, 16, 22, 30, 32, 34, 36, 38, 40, 42, 48, 64) empfängt und Daten von einem der Kameramodule (12, 14, 16, 22, 30, 32, 34, 36, 38, 40, 42, 48, 64) zu zumindest einem der anderen Kameramodule (12, 14, 16, 22, 30, 32, 34, 36, 38, 40, 42, 48, 64) weiterleitet.

12. Betriebsverfahren nach Anspruch 11,
wobei die Kamera (10) über das Datennetzwerk (18, 20) mit einer zweiten Kamera (10) gekoppelt wird und die Kamera (10) zumindest ein Kameramodul (12, 14, 16, 22, 30, 32, 34, 36, 38, 40, 42, 48, 64) der zweiten Kamera (10) nutzt.

13. Betriebsverfahren nach Anspruch 12,
wobei ein Bedienmodul (14) der zweiten Kamera (10) verwendet wird, um die Kamera (10) zu steuern und/oder zu konfigurieren,
und/oder wobei ein Anzeigemodul (16) der Kamera (10) verwendet wird, um Kamerabilder der zweiten Kamera (10) anzuzeigen.

14. Betriebsverfahren nach zumindest einem der Ansprüche 11 bis 13, wobei das Bilderfassungmodul der Kamera (10) und das Bilderfassungsmodul (12) der zweiten Kamera (10) über das Datennetzwerk (18, 20) synchronisiert werden.

15. Kameramodul (12, 14, 16, 22, 30, 32, 34, 36, 38, 40, 42, 48, 64) zum Anschließen an eine modulare Kamera (10),
wobei das Kameramodul (12, 14, 16, 22, 30, 32, 34, 36, 38, 40, 42, 48, 64) mittels eines Datennetzwerks (18, 20) mit der modularen Kamera (10) verbindbar ist, wobei das Kameramodul (12, 14, 16, 22, 30, 32, 34, 36, 38, 40, 42, 48, 64) ausgebildet ist, Daten über das Datennetzwerk (18, 20) von zumindest einem anderen Kameramodul (12, 14, 16, 22, 30, 32, 34, 36, 38, 40, 42, 48, 64) zu empfangen und Daten an zumindest eines der anderen Kameramodule (12, 14, 16, 22, 30, 32, 34, 36, 38, 40, 42, 48, 64) zu senden.
